# FASCICULE DE BREVET EUROPEEN

(11) **EP 2 668 001 B1**
(45) Date de publication et mention de la délivrance du brevet: **17.08.2016**
(21) Numéro de dépôt: 12704861.9
(22) Date de dépôt: 10.01.2012
(51) Int. Cl.: B23P 15/04, B23K 20/18, B21D 53/78, F01D 5/14, B23K 20/02, F04D 29/38

(54) **PROCÉDÉ DE RÉALISATION D'UN RENFORT MÉTALLIQUE**
VERFAHREN ZUR HERSTELLUNG EINER METALLVERSTÄRKUNG
METHOD FOR PRODUCING A METAL REINFORCEMENT

(30) Priorité: 24.01.2011 FR 1150532
(43) Date de publication de la demande: 04.12.2013
(73) Titulaire: SNECMA, 75015 Paris (FR)
(72) Inventeur: KLEIN, Gilles, Charles, Casimir, F-77550 Moissy Cramayel Cedex (FR); FRANCHET, Jean-Michel, Patrick, Maurice, F-77550 Moissy Cramayel Cedex (FR); LECONTE, Gilbert, Michel, Marin, F-77550 Moissy Cramayel Cedex (FR); MAGNAUDEIX, Dominique, F-77550 Moissy Cramayel Cedex (FR)
(74) Mandataire: Robert, Mathias
(86) Numéro de dépôt international: PCT/FR2012/050067
(87) Numéro de publication internationale: WO 2012/101356

(56) Documents cités:
- EP-A1- 1 450 006
- EP-A1- 1 574 270
- WO-A1-94/23890
- WO-A1-2009/039282
- WO-A1-2011/114073
- FR-A1- 2 319 008

## Description

La présente invention concerne un procédé de réalisation d'un renfort métallique destiné à être monté sur le bord d'attaque ou de fuite d'une aube composite de turbomachine, telle qu'une aube de soufflante d'un turboréacteur ou un turbopropulseur d'avion.

Afin de réduire le poids et le coût des aubes de soufflante de turbomachine, celles-ci sont généralement réalisées en matériau composite. Les aubes de soufflante doivent résister à des contraintes et des chocs importants, du fait de leur vitesse de rotation et des impacts de particules ou de corps étrangers pouvant pénétrer dans la veine d'air. Pour cela, les aubes en composite sont protégées, au niveau de leurs bords d'attaque et/ou de fuite, par des renforts métalliques collés sur les pales des aubes.

Le document EP 1 574 270-A1, au nom de la Demanderesse, décrit un procédé de réalisation d'un renfort par soudage par diffusion et formage superplastique ou SPF/DB (Super Plasting Forming / Diffusion Bonding), comportant les étapes consistant à :
- souder deux tôles l'une à l'autre par soudage diffusion afin d'obtenir une préforme, une partie des tôles étant recouverte d'un produit anti-diffusant afin d'éviter leur soudage dans des zones déterminées ;
- cambrer et vriller la préforme,
- gonfler la préforme afin qu'elle subisse un formage superplastique,
- découper la préforme afin d'obtenir le renfort.

Ce procédé ne permet pas de contrôler précisément la forme intérieure de la cavité du renfort. En particulier, les zones de jonction des tôles forment des zones de concentration de contraintes et d'amorce de rupture fragilisant le renfort.

Afin d'améliorer la tenue mécanique du renfort, la demande de brevet WO2011/114073, déposée par la Demanderesse, propose un procédé de réalisation d'un renfort métallique consistant à :
- mettre en forme deux tôles par matriçage pour les rapprocher de la forme définitive du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau par compression isostatique à chaud,
- découper les tôles pour séparer le renfort et libérer le noyau.

La compression isostatique à chaud des tôles permet de conformer les tôles à la forme du noyau et d'obtenir, dans la zone de jonction des tôles, un grand rayon de raccordement et, par conséquent, d'éviter toute zone de concentration de contraintes ou d'amorce de rupture.

La paroi interne du renfort, formant ses surfaces d'intrados et d'extrados, destinées à être collées respectivement sur les surfaces d'intrados et d'extrados de l'aube au niveau de son bord d'attaque ou de fuite, subissent une opération d'usinage supplémentaire avant collage visant à leur conférer une plus grande rugosité, de façon à obtenir une meilleure adhérence du renfort sur l'aube.

Cette opération d'usinage est complexe car l'outil doit pénétrer dans la cavité interne effilée du renfort, délimitée par les surfaces d'intrados et d'extrados.

Le document FR 2 319 008 divulgue également un procédé de réalisation d'un renfort métallique selon le préambule de la revendication 1.

L'invention a notamment pour but d'apporter une solution simple, efficace et économique à ce problème.

A cet effet, elle propose un procédé de réalisation d'un renfort métallique destiné à être monté sur le bord d'attaque ou de fuite d'une aube composite de turbomachine, comportant les étapes consistant à :
- mettre en forme deux tôles pour les rapprocher de la forme finale du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau
- découper les tôles pour séparer le renfort et libérer le noyau,
caractérisé en ce les tôles sont conformées sur le noyau par compression isostatique à chaud, et en ce qu'il consiste à donner une rugosité prédéterminée non nulle à au moins une partie de la surface du noyau et à transférer cette rugosité à une partie correspondante de la surface interne du renfort par la compression isostatique à chaud.

De cette manière, la rugosité du noyau est directement « imprimée » sur les surfaces internes d'intrados et d'extrados du renfort. L'opération supplémentaire d'usinage précitée n'est alors plus nécessaire, ce qui permet de réduire la durée et les coûts de réalisation du renfort.

Avantageusement, au moins une partie de la surface du noyau a une rugosité Ra supérieure à 3 µm, préférentiellement comprise entre 3,2 et 6,4 µm.

Après séparation du renfort, le noyau peut être réutilisé pour d'autres cycles de fabrication.

Une telle rugosité, une fois transférée sur les surfaces internes d'intrados et d'extrados du renfort, permet une bonne adhérence de la colle.

Selon une possibilité, la surface externe du noyau comporte des zones de rugosités différentes.

L'utilisation de plusieurs zones de rugosités différentes peut être nécessaire dans des applications particulières.

La rugosité de la surface externe du noyau peut être obtenue par fraisage, par grenaillage mécanique, par sablage, par usinage laser, par électroérosion et/ou par usinage chimique.

De manière préférée, le noyau est réalisé en matériau réfractaire métallique, par exemple en alliage de nickel ou en céramique, passivé par recouvrement par une barrière anti-diffusion non contaminante pour le matériau métallique des tôles, obtenue soit par dépôt d'un oxyde, par exemple oxyde d'yttrium, soit par formation d'une couche d'oxydation par traitement thermique.

On évite ainsi l'adhérence des tôles au noyau lors de la compression isostatique à chaud.

Les tôles peuvent être en alliage à base de titane, par exemple en TA6V.

Un tel matériau peut être facilement mis en forme à des températures de l'ordre de 940°C, et est capable de résister à des contraintes importantes ou à des impacts avec des particules ou des corps étrangers, à température plus faible.

Selon un exemple, la mise en forme des tôles avant positionnement de part et d'autre du noyau est réalisée par matriçage.

Selon un autre exemple, l'assemblage des deux tôles l'une à l'autre est réalisé par soudage par faisceau d'électrons (FE).

De manière avantageuse, le noyau comporte une première face reproduisant, pour une moitié, la forme interne de l'intrados d'un premier renfort, et pour une autre moitié, la forme interne de l'extrados d'un second renfort, le noyau comportant une seconde face opposée à la première reproduisant, pour une moitié, la forme interne de l'extrados du premier renfort, et pour une autre moitié, la forme interne de l'intrados du second renfort, les deux renforts étant séparés l'un de l'autre par découpage après conformation des tôles sur le noyau par compression isostatique à chaud. Il est ainsi possible de réaliser deux renforts par cycle de fabrication, avec un seul noyau, ce qui diminue le coût de fabrication des renforts.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 représentent schématiquement l'étape de mise en forme des tôles du procédé selon l'invention,
- la figure 3 représente schématiquement l'étape d'assemblage des tôles autour du noyau,
- la figure 4 représente schématiquement l'étape de conformation des tôles sur le noyau par compression isostatique à chaud et l'étape de découpe des tôles pour séparer le renfort et libérer le noyau,
- la figure 5 est une vue en perspective d'une partie du renfort obtenu par exécution du procédé selon l'invention.

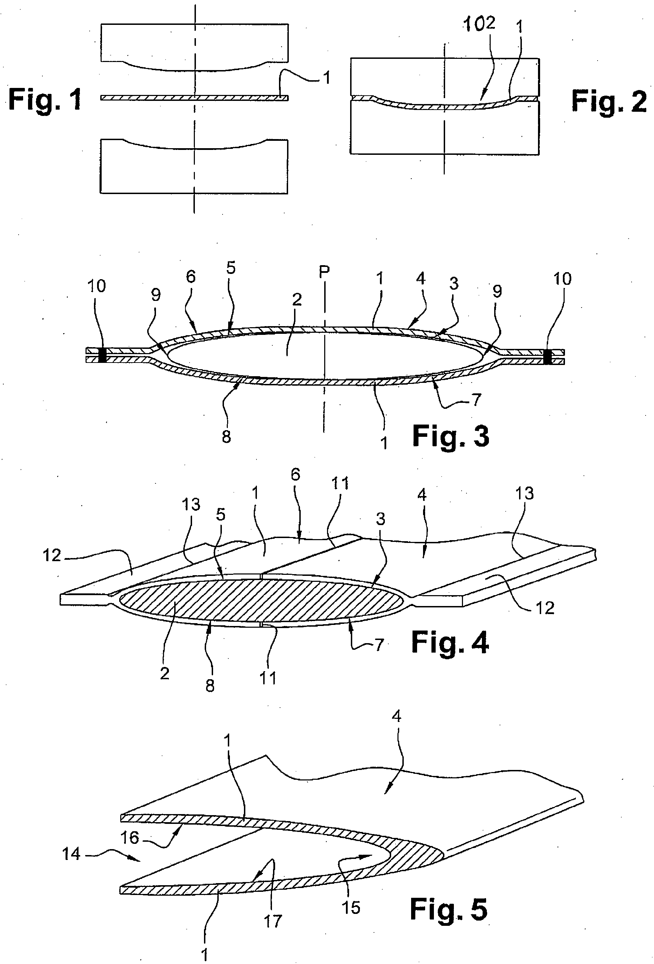

La figure 1 représente une étape de matriçage à chaud de tôles 1 afin de les mettre en forme pour les rapprocher de la forme finale des renforts à réaliser. A l'issue de cette mise en forme, chaque tôle 1 comporte une zone concave 102 délimitant un creux. Les tôles 1 sont en alliage à base de titane, par exemple en TA6V. L'étape de mise en forme est réalisée à une température de l'ordre de 940 °C.

Comme cela est représenté à la figure 3, deux tôles 1 identiques sont ensuite disposées en vis-à-vis, de part et d'autre d'un noyau 2, les concavités des tôles 1 logeant chacune une partie du noyau 2.

Le noyau 2 présente un plan de symétrie P perpendiculaire aux tôles et comporte une première face reproduisant, pour une moitié 3, la forme interne de l'intrados d'un premier renfort 4 à réaliser, et pour une autre moitié 5, la forme interne de l'extrados d'un second renfort 6 à réaliser. Le noyau 2 comporte en outre une seconde face, opposée à la première et reproduisant, pour une moitié 7, la forme interne de l'extrados du premier renfort 5, et pour une autre moitié 8, la forme interne de l'intrados 3 du second renfort 6.

Les zones de liaison 9 entre les deux faces, c'est-à-dire les bords latéraux du noyau 2, ont un rayon de compris entre 2 et 6 mm.

Le noyau 2 est réalisé en un matériau réfractaire avec lequel il n'y a pas diffusion du titane, et en un alliage métallique présentant un coefficient de dilatation très différent de celui des tôles 1 en titane, par exemple de l'IN100.

L'objectif est d'éviter toute adhérence des tôles 1 au noyau 2 lors des différentes opérations réalisées, en particulier lors de l'opération de compression isostatique à chaud.

Dans ce but également, le noyau 2 peut être passivé par recouvrement par une barrière anti-diffusion non contaminante pour le matériau métallique des tôles, obtenue soit par dépôt d'un oxyde, par exemple oxyde d'yttrium, soit par formation d'une couche d'oxydation par traitement thermique.

Préalablement, les faces du noyau 2 ont été traitées ou usinées de manière à leur conférer une rugosité déterminée, par exemple une rugosité Ra supérieure à 3 µm, préférentiellement comprise entre 3,2 et 6,4 µm.

La rugosité de la surface externe du noyau 2 peut être obtenue par fraisage, par grenaillage mécanique, par sablage, par usinage laser, par électroérosion et/ou par usinage chimique.

Si nécessaire, la surface externe du noyau 2 peut comporter des zones de rugosités différentes.

Une fois les tôles 1 mises en place autour du noyau 2, elles sont assemblées à leur périphérie par pointage (non représenté aux figures) et soudage TIG (Tungsten Inert Gas) afin d'être liées entre elles et maintenues en position. L'ensemble est ensuite placé dans une enceinte de mise sous vide afin d'y souder les tôles 1 l'une à l'autre sur toute leur périphérie, par exemple par soudage par faisceau d'électrons (FE). Le cordon de soudure périphérique continu 10 assure l'étanchéité de la cavité formée entre les tôles 1.

Comme représenté à la figure 3, les tôles 1 sont ensuite conformées sur le noyau 2 par compression isostatique à chaud lors de laquelle les tôles 1 sont soumises à une pression externe d'environ 1000 bars, à une température d'environ 940°C, et pendant une durée d'environ 3 heures, dans le cas où les tôles 1 sont en en alliage de titane TA6V.

Durant cette opération, les tôles 1 se déforment pour se conformer parfaitement au noyau 2, y compris dans les zones de liaison 9 du noyau 2. Dans ces zones en particulier, les tôles 1 se rejoignent tout en épousant la forme arrondie du noyau 2.

Lors de cette étape, la rugosité du noyau 2 est transférée ou « imprimée » sur les surfaces internes des tôles 1 en contact avec le noyau rugueux 2.

Parallèlement, du fait de la température élevée, les deux tôles 1 sont soudées l'une à l'autre par diffusion.

Les deux renforts 4, 6 sont ensuite séparés par découpe des tôles 1 le long de lignes 11 situées à l'intersection desdites tôles avec le plan de symétrie P.

La matière excédentaire périphérique 12 est retirée par découpe selon les lignes de détourage 13. Enfin, un usinage de finition permet de donner la forme extérieure recherchée aux renforts 4, 6.

On obtient ainsi deux renforts présentant chacun une forme représentée à la figure 5, dans laquelle la jonction entre les deux tôles 1, réalisée par soudage diffusion, assure des caractéristiques mécaniques équivalentes à celles d'une pièce monobloc. La cavité 14 de chaque renfort comporte en outre, au niveau de la zone de jonction 15 entre l'intrados 16 et l'extrados 17, un rayon de courbure suffisamment important pour ne pas générer de concentration de contraintes et de fissures en utilisation.

Enfin, les surfaces internes 16, 17 de la cavité 14 présentent une rugosité suffisante pour permettre le collage du renfort 4, 6 sur un bord d'attaque ou un bord de fuite d'une aube en matériau composite, par exemple à l'aide d'une colle de type époxy.

Le noyau 2, quant à lui, peut être réutilisé pour réaliser d'autres renforts.

## Revendications

1. Procédé de réalisation d'un renfort métallique (4, 6) destiné à être monté sur le bord d'attaque ou de fuite d'une aube composite de turbomachine, comportant les étapes consistant à :
- mettre en forme deux tôles (1) pour les rapprocher de la forme finale du renfort (4, 6) à réaliser,
- positionner les deux tôles (1) de part et d'autre d'un noyau (2) reproduisant les formes internes de l'extrados (17) et de l'intrados (16) du renfort (4, 6),
- assembler les deux tôles (1) l'une à l'autre autour du noyau (2) de façon étanche et sous vide,
- conformer les tôles (1) sur le noyau (2),
- découper les tôles (1) pour séparer le renfort (4, 6) et libérer le noyau (2),
**caractérisé en ce que** les tôles (1) sont conformées sur le noyau (2) par compression isostatique à chaud, et **en ce qu'**il consiste à donner une rugosité prédéterminée non nulle à au moins une partie de la surface du noyau (2) et à transférer cette rugosité à une partie correspondante de la surface interne (16, 17) du renfort (4, 6) par la compression isostatique à chaud.

2. Procédé selon la revendication 1, **caractérisé en ce qu'**au moins une partie de la surface du moyeu a une rugosité Ra supérieure à 3 µm, préférentiellement comprise entre 3,2 et 6,4 µm.

3. Procédé selon la revendication 1 ou 2, **caractérisé en ce que** la surface externe du noyau (2) comporte des zones de rugosités différentes.

4. Procédé selon l'une des revendications 1 à 3, **caractérisé en ce que** la rugosité de la surface externe (3, 5, 7, 8) du noyau (2) est obtenue par fraisage, par grenaillage mécanique, par sablage, par usinage laser, par électroérosion et/ou par usinage chimique.

5. Procédé selon l'une des revendications 1 à 4, **caractérisé en ce que** le noyau (2) est réalisé en matériau réfractaire métallique, par exemple en alliage de titane ou de nickel, et est passivé par recouvrement par une barrière anti-diffusion non contaminante pour le matériau métallique des tôles, par exemple en oxyde d'yttrium.

6. Procédé selon l'une des revendications 1 à 5, **caractérisé en ce que** les tôles (1) sont en alliage à base de titane, par exemple en TA6V.

7. Procédé selon l'une des revendications 1 à 6, **caractérisé en ce que** la mise en forme des tôles (1) avant positionnement de part et d'autre du noyau (2) est réalisée par matriçage.

8. Procédé selon l'une des revendications 1 à 7, **caractérisé en ce que** l'assemblage des deux tôles (1) l'une à l'autre est réalisé par soudage par faisceau d'électrons.

9. Procédé selon l'une des revendications 1 à 8, **caractérisé en ce que** le noyau (2) comporte une première face reproduisant, pour une moitié (3), la forme interne de l'intrados d'un premier renfort (4), et pour une autre moitié (5), la forme interne de l'extrados d'un second renfort (6), le noyau comportant une seconde face opposée à la première reproduisant, pour une moitié (7), la forme interne de l'extrados du premier renfort (4), et pour une autre moitié (8), la forme interne de l'intrados du second renfort (6), les deux renforts (4, 6) étant séparés l'un de l'autre par découpage (11) après conformation des tôles (1) sur le noyau (2) par compression isostatique à chaud.

## Patentansprüche

1. Verfahren für die Herstellung einer metallischen Verstärkung (4, 6), die dazu bestimmt ist, auf die Vorderkante oder Hinterkante einer Verbundschaufel einer Turbomaschine montiert zu werden, und welches folgende Schritte umfasst:
- das Formen zweier Bleche (1), um sie der Endform der herzustellenden Verstärkung (4, 6) anzunähern,
- das Positionieren der beiden Bleche (1) zu beiden Seiten eines Kerns (2), der die innere Form der Außenseite (17) und der Innenseite (16) der Verstärkung (4, 6) nachbildet,
- das dichte Verbinden der beiden Bleche (1) um den Kern (2) im Vakuum,
- das Anformen der Bleche (1) an den Kern (2),
- das Durchschneiden der Bleche (1), um die Verstärkung (4, 6) abzutrennen und den Kern (2) freizugeben,
**dadurch gekennzeichnet, dass** die Bleche (1) durch isostatisches Heißpressen an den Kern (2) angeformt werden und dadurch, dass es darin besteht, mindestens einem Teil der Fläche des Kerns (2) eine vordefinierte Rauheit ungleich Null zu verleihen und diese Rauheit durch isostatisches Heißpressen auf einen entsprechenden Teil der Innenfläche (16, 17) der Verstärkung (4, 6) zu transferieren.

2. Verfahren nach Anspruch 1, **dadurch gekennzeichnet, dass** mindestens ein Teil der Nabenfläche eine Rauheit Ra größer 3 µm, vorzugsweise aber zwischen 3,2 und 56,4 µm aufweist.

3. Verfahren nach Anspruch 1 oder 2, **dadurch gekennzeichnet, dass** die Außenfläche des Kerns (2) Bereiche mit unterschiedlichem Rauheitsgrad aufweist.

4. Verfahren nach einem der Ansprüche 1 bis 3, **dadurch gekennzeichnet, dass** die Rauheit der Außenfläche (3, 5, 7, 8) des Kerns (2) durch Fräsen, mechanisches Kugelstrahlen, Sandstrahlen, Laserbearbeitung, Funkenerosion und/oder chemische Bearbeitung erzielt wird.

5. Verfahren nach einem der Ansprüche 1 bis 4, **dadurch gekennzeichnet, dass** der Kern (2) aus einem feuerfesten metallischen Werkstoff hergestellt wird, zum Beispiel aus einer Titan-Nickel-Legierung, und durch Abdecken mit einer für den metallischen Werkstoff der Bleche nicht kontaminierenden Diffusionssperrschicht, wie z.B. mit Yttriumoxid, passiviert wird.

6. Verfahren nach einem der Ansprüche 1 bis 5, **dadurch gekennzeichnet, dass** die Bleche (1) aus einer Titan-Legierung, zum Beispiel Ta6V, bestehen.

7. Verfahren nach einem der Ansprüche 1 bis 6, **dadurch gekennzeichnet, dass** die Formgebung der Bleche
(1) vor dem Positionieren zu beiden Seiten des Kerns
(2) durch Gesenkschmieden erfolgt.

8. Verfahren nach einem der Ansprüche 1 bis 7, **dadurch gekennzeichnet, dass** das Verbinden der beiden Bleche (1) durch Elektronenstrahlschweißen erfolgt.

9. Verfahren nach einem der Ansprüche 1 bis 8, **dadurch gekennzeichnet, dass** der Kern (2) eine erste Seite umfasst, deren eine Hälfte (3) die innere Form der Innenseite einer ersten Verstärkung (4) hat und deren andere Hälfte (5) die innere Form der Außenseite einer zweiten Verstärkung (6) aufweist, wobei der Kern eine zweite Seite enthält, deren eine Hälfte (7) die innere Form des Außenseite der ersten Verstärkung (4) aufweist und deren andere Hälfte die innere Form der Innenseite der zweiten Verstärkung (6) hat, wobei die beiden Verstärkungen (4, 6) nach der Anformung der Bleche (1) am Kern (2) durch isostatisches Heißpressen durch Schneiden (11) voneinander getrennt werden.

## Claims

1. A method of making a metal reinforcing piece (4, 6) for mounting on the leading edge or the trailing edge of a composite material blade of a turbine engine, the method comprising the steps consisting in:
· shaping two metal sheets (1) to approximate the final shape of the reinforcing piece (4, 6) that is to be made;
· positioning the two sheets (1) on either side of a core (2) reproducing the inside shapes of the suction and pressure sides (17, 16) of the reinforcing piece (4, 6);
· assembling the two metal sheets (1) together around the core (2) in sealed manner under a vacuum;
· shaping the sheets (1) onto the core (2);
· cutting the sheets (1) to separate the reinforcing piece (4, 6) and release the core (2);
the method being **characterized in that** the sheets (1) are shaped onto the core (2) by hot isostatic compression, and **in that** the method consists in giving non-zero predetermined roughness to at least a portion of the surface of the core (2) and in transferring this roughness to a corresponding portion of the inside surface (16, 17) of the reinforcing piece (4, 6) by hot isostatic compression.

2. A method according to claim 1, **characterized in that** at least a portion of the surface of the core has roughness Ra greater than 3 µm, and preferably lying in the range 3.2 µm to 6.4 µm.

3. A method according to claim 1 or claim 2, **characterized in that** the outside surface of the core (2) includes zones of different roughnesses.

4. A method according to any one of claims 1 to 3, **characterized in that** the roughness of the outside surface (3, 5, 7, 8) of the core (2) is obtained by milling, by mechanical shot peening, by sand blasting, by laser machining, by electro-corrosion, and/or by chemical machining.

5. A method according to any one of claims 1 to 4, **characterized in that** the core (2) is made of a metal refractory material, e.g. an alloy of titanium or of nickel, and is passivated by being covered in an anti-diffusion barrier that is not contaminating for the metal material of the sheets, e.g. a barrier off yttrium oxide.

6. A method according to any one of claims 1 to 5, **characterized in that** the sheets (1) are made of a titanium-based alloy, e.g. of TA6V.

7. A method according to any one of claims 1 to 6, **characterized in that** the sheets (1) are shaped prior to being positioned on either side of the core (2) by die stamping.

8. A method according to any one of claims 1 to 7, **characterized in that** the two sheets (1) are assembled together by electron beam welding.

9. A method according to any one of claims 1 to 8, **characterized in that** the core (2) has a first face with one half (3) reproducing the inside shape of the pressure side of a first reinforcing piece (4) and another half (5) reproducing the inside shape of the suction side of a second reinforcing piece (6), the core also having a second face opposite to the first face and having one half (7) that reproduces the inside shape of the suction side of the first reinforcing piece (4), and another half (8) that reproduces the inside shape of the pressure side of the second reinforcing piece (6), the two reinforcing pieces (4, 6) being separated from each other by cutting (11) after the sheets (1) have been shaped on the core (2) by hot isostatic compression.
